# EUROPEAN PATENT APPLICATION

(11) **EP 1 892 381 A2**
(43) Date of publication of application: **27.02.2008**
(21) Application number: 07253217.9
(22) Date of filing: 16.08.2007
(51) Int. Cl.: F01D 11/08

(54) **Sealing arrangement**

(30) Priority: 24.08.2006 US 510075
(71) Applicant: United Technologies Pratt & Whitney, East Hartford, 06108 CT (US)
(72) Inventor: Baird, Donald J., Jupiter, Florida 33458 (US); Cini, Colin L., Vernon, Connecticut 06066 (US)
(74) Representative: Leckey, David Herbert

(57) **Abstract**

Disclosed is a compliant seal arrangement (50) for restricting leakage through a gap between a first (54) and second (56) component. A seal assembly (58) is formed by stacking leaf strips (70) flat and sandwiching the stacked leaf strips (70) between a back plate (66) and a side plate (68). The leaf strips (70) are secured to the plates at a joint (84) along an edge (86) of the strips (70) that are in contact with the plates (66, 68). The seal assembly (58) is installed across the gap (52) to form the seal arrangement (50). The strips (70) extend from the first component (54), bridge the gap (52) and contact the second component (56), thereby restricting the leakage of fluid through the gap (52). Because the strips (70) are compliant, relative motion between the components (54, 56) deflects the strips (70), not causing permanent deformation.

## Description

### BACKGROUND OF THE INVENTION

### (1) FIELD OF THE INVENTION

The invention relates to gas turbine engine components in general, and more specifically to a sealing arrangement for restricting leakage of a pressurized fluid through a gap formed between such components.

### (2) DESCRIPTION OF THE RELATED ART

Gas turbine engines operate according to a continuous-flow, Brayton cycle. Ambient air is pressurized in a forward compressor section, fuel is added to the air and the mixture is burned in a central combustor section, and the combustion gases are expanded through a rearward turbine section before being expelled from a rearmost nozzle. Bladed rotors in the turbine section convert thermodynamic energy from the expanding gases into mechanical energy to rotate centrally mounted, longitudinal shafts. The rotating shafts drive the forward compressor section, thus completing the cycle. Gas turbine engines are compact and efficient power plants that are typically used to power aircraft, heavy equipment, waterborne vehicles and electrical generators.

The fuel burn of a gas turbine engine may be negatively impacted if pressurized compressor air leaks through gaps or if the expanding gas leaks around the bladed turbine rotors. Fluid leakage can occur at stationary component interfaces where gaps exist, but leakage is most prevalent at the interfaces between rotating and stationary components. Engineered clearance gaps between components allow for thermal and centripetal growth of the components and require abradable or compliant sealing systems for restricting fluid leakage. In the past, designers have attempted to seal the gaps between stationary and rotating components with varying degrees of success.

What is needed is a compliant interface seal that provides a greater restriction to fluid leakage between gas turbine engine components. A seal providing a reduction in weight over prior art seals would also be beneficial.

### BRIEF SUMMARY OF THE INVENTION

In accordance with a preferred embodiment of the present invention, there is provided a compliant seal assembly for restricting leakage between components. Leaf strips made of a compliant material are stacked flat and sandwiched between a back plate and a side plate. The leaf strips are secured to the plates along an edge of the strips in contact with the plates. Since the strips are secured to the back and side plates only where they contact the plates, an overall weight reduction of the seal results.

The seal assembly is installed across gaps between stationary and rotating components to form a seal arrangement. The strips extend from the first component, bridge the gap and contact the second component, thereby restricting the leakage of fluid through the gap. Because the strips are compliant, relative motion between the components deflects the strips, not causing permanent deformation.

An advantage of the present seal arrangement is its ability to deflect during relative motion between components. By deflecting as the gap closes, the strips and components don't suffer permanent damage from interference so the useful life is extended. Compliant contact between the strips and the components also provides an improved restriction to fluid leakage over all operating conditions for reduced fuel burn. Another advantage is the reduction of weight over prior art seals, since the strips are secured to the back and side plates only where they contact the plates.

These and other features and advantages of the present invention will become apparent in view of the following detailed description and accompanying illustrations of multiple embodiments, where corresponding identifiers represent like features between the various drawings.

### BRIEF DESCRIPTION OF THE SEVERAL VIEWS OF THE DRAWINGS

FIG. 1 is a simplified cross sectional view of an axial flow gas turbine engine with an upper half illustrating a geared fan and variable area fan nozzle and a lower half illustrating a conventional fan with constant area fan nozzle;
FIG. 2 is a partial front view of a seal arrangement of the type used in the gas turbine engine of FIG..1, according to an embodiment of the present invention;
FIG. 3 is an enlarged view of area 3 the seal arrangement of FIG. 2;
FIG. 4 is a partial sectional side view of the seal arrangement of FIG. 2;
FIG. 5 is a partial top view of another seal arrangement of the type used in the gas turbine engine of FIG. 1, according to another embodiment of the present invention;
FIG. 6 is a partial sectional side view of the seal arrangement of FIG. 5;
FIG. 7 is a partial top view of yet another seal arrangement of the type used in the gas turbine engine of FIG. 1, according to yet another embodiment of the present invention; and
FIG. 8 is a partial perspective view of the seal arrangement of FIG. 7 with a second component removed for clarity.

### DETAILED DESCRIPTION OF THE INVENTION

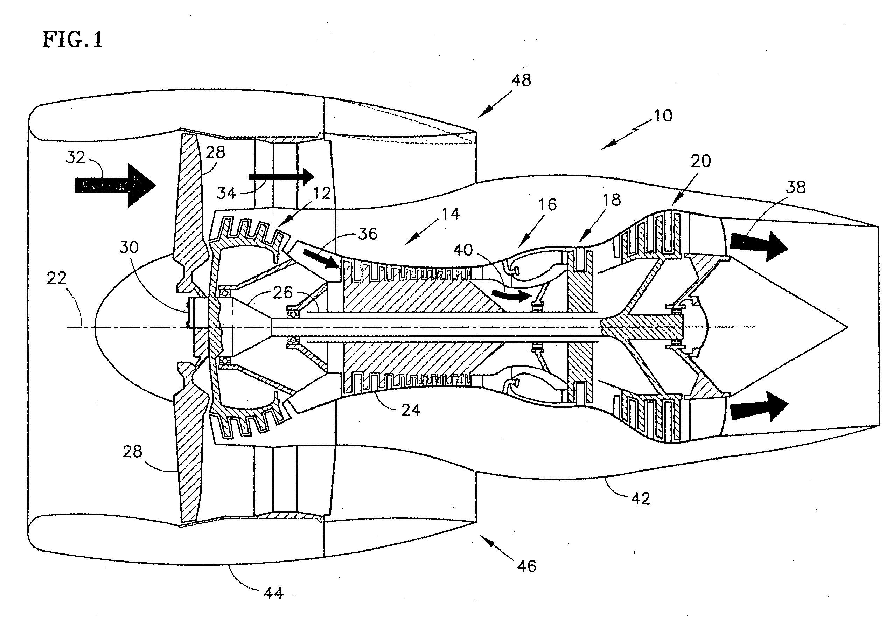

A gas turbine engine 10 of FIG. 1 includes in series from front to rear, rotating low-pressure 12 and high-pressure 14 compressors, a stationary combustor 16 and rotating high-pressure 18 and low-pressure 20 turbines. Each section is disposed about a central, longitudinal axis 22 of the engine 10 and enclosed within cylindrical casing structures 24. The turbines 18, 20 are coupled to the compressors 14, 12 via one or more centrally mounted, concentric shafts 26. A forward most fan 28 may be driven directly by a shaft 26 along with the low-pressure compressor 12 or driven independently by a gearbox 30 attached to a shaft 26.

Ambient air 32 is drawn into the engine 10 by the fan 28 and immediately directed into two fluid streams: a bypass fluid 34 and a working fluid 36. The bypass fluid 34 is directed radially outboard of the casing structure 24. The working fluid 36 is pressurized in the compressors 12, 14 and directed into the combustor 16, where fuel is injected and the mixture is burned. Hot combustion gases exit the combustor 16 and expand within the turbines 18, 20. The combustion gases exit the engine 10 as a propulsive thrust 38. A portion of the working fluid 36 is bled from the compressors 14, 16 as a cooling fluid 40 and is directed radially around the combustor 16 for use in cooling the turbines 18, 20.

When installed on an aircraft, the engine 10 is aerodynamically streamlined with inner 42 and outer 44 cowlings. The outer cowling 44 includes an aft portion, which may be fixed 46 or variable 48. A variable aft portion 48 meters the bypass air 34 to reduce fuel burn over all engine 10 operating conditions.

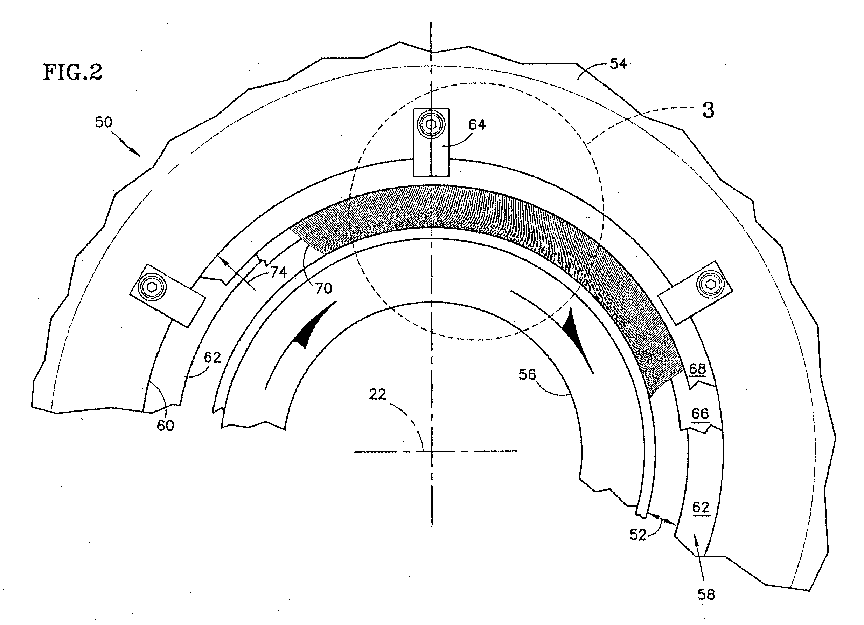

Referring now to Figs. 2-4, one skilled in the art will recognize an embodiment of a seal arrangement 50 for restricting leakage of a fluid 36 or 40 through a gap 52 disposed between a first component 54 and a second component 56. In the embodiment shown, the first component 54 is stationary and circumscribes the second component 56, which rotates about axis 22 to form the gap 52. A seal assembly 58 restricts leakage of fluid 36 or 40 in a direction parallel to the axis 22. In other configurations of the present seal arrangement 50, both components 54 and 56 are stationary, only one of the components 54 or 56 is rotating, or both of the components 54 and 56 are rotating at identical or varying speeds and directions.

An annular seal assembly 58 fits within a bore 60 and against a seat 62 formed in the first component 54. The seal assembly 58 is secured to the first component 54 by fastening means 64 such as tabs, bolts, rivets, welding, or by any other means known in the art. The seal assembly 58 comprises a back plate 66, a side plate 68 and a plurality of leaf strips 70 sandwiched by and secured to the plates 66, 68.

The plates 66 and 68 are ring shaped members, each with an outer diameter 72 slightly less than an inner diameter 74 of the bore 60, but a line on line or interference fit may also be used. It is preferable to have an inner diameter 76 of the back plate 66 less than an inner diameter 78 of the side plate 68 to provide downstream support for the leaf strips 70 while subjected to the fluid pressure load. The back and side plates 66, 68 are made of any suitable high temperature and corrosion resistant material such as a Nickel based alloy for gas turbine engine applications.

The leaf strips 70 are also preferably made of any high temperature and corrosion resistant material such as a Nickel based alloy. The strips 70 should be less than 0.010 inch (0.254 mm) thick and preferably less than or equal 0.005 inch (0.127 mm) thick to provide optimal flexural strength and resiliency. A surface finish of 32 micro inches or less on each leaf strip face 80 allows the leaf strips 70 to stack together without gaps, providing for increased restriction to fluid 36 or 40 leakage.
The leaf strips 70 are sandwiched widthwise at a lay angle α to a radius line 82 extending from the axis 22. The angle α is greater than 0 degrees but less than 90 degrees and preferably about 45 degrees. Once the stacked leaf strips 70 are sandwiched between the plates 66, 68, the leaf strips 70 are secured to the plates along a joint 84 extending at least over a portion of an edge 86 in contact with the plates 66, 68. The leaf strips 70 may be secured to the plates 66, 68 by Metal Inert Gas (MIG) welding, Tungsten Inert Gas (TIG) welding or Laser welding, but are preferably secured by brazing. To simplify assembly, braze paste may be applied directly to the plates 66, 68 and the seal assembly 58 may be heated in a furnace to melt the braze paste, thus creating the joint 84. Since the leaf strips 70 are only secured over a portion of an edge 86 in contact with the plates 66, 68, the overall weight of the seal assembly 58 is reduced. A free end 88 comprises an inner edge profile 90 that is shaped to match the second component 56. The profile 90 may be linear or nonlinear shaped. The profile 90 may be formed during manufacture by grinding, electrodischarge machining (EDM) or other suitable method.

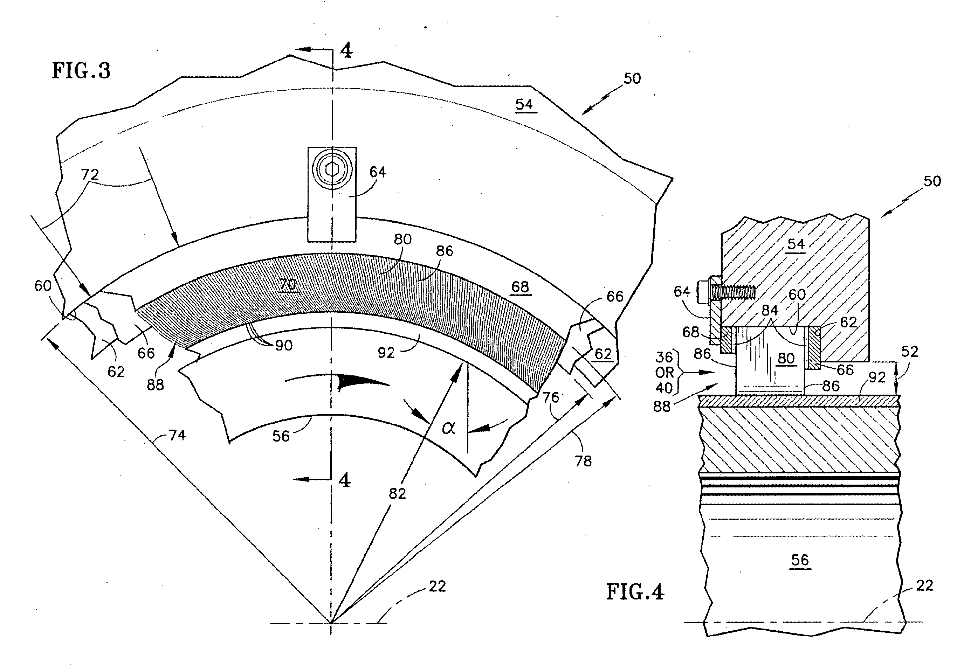

With the seal assembly 58 installed in the bore 60, the leaf strips 70 extend across the gap 52 with the free ends 88 contacting the second component 56. The strips 70 may extend radially inward, radially outward or axially. The second component 56 preferably contains a hardface coating 92 or other surface treatment to reduce wear under extended operation. As is best illustrated in Fig. 2 and 3, the lay angle α allows the leaf strips 70 to flex outward as the gap 52 closes and allows the second component 56 to move in relation to the first component 54 without the seal assembly 58 binding, permanently deforming or generating excessive heat.

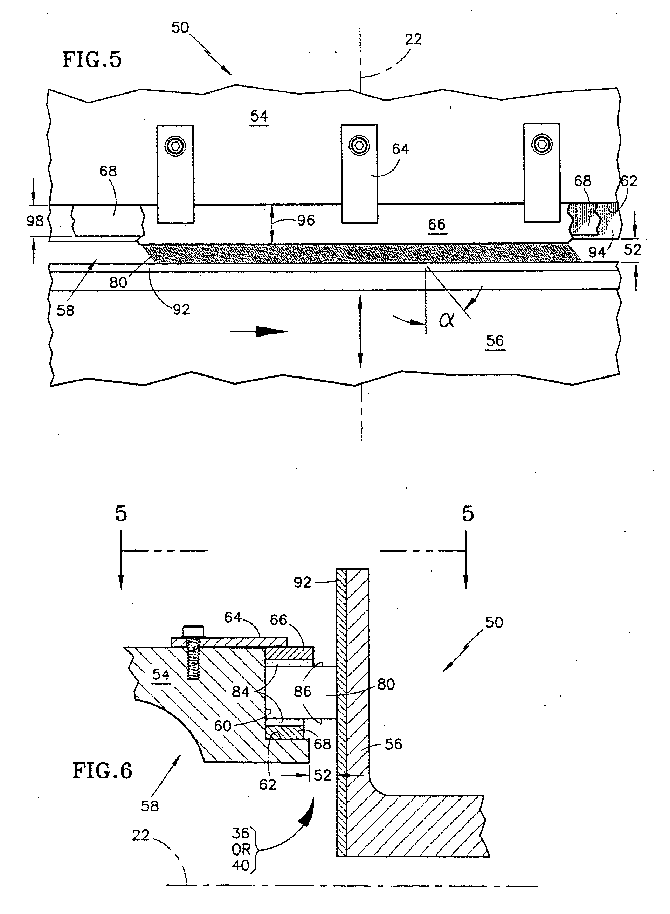

Referring now to Figs. 5-6, one skilled in the art will recognize another embodiment of a seal arrangement 50 for restricting leakage of a fluid 36 or 40 through a gap 52 disposed between a first component 54 and the second component 56. In the present embodiment, the first component 54 is stationary and is spaced from the second component 56 that rotates about axis 22 forming the gap 52. A seal assembly 58 restricts leakage of fluid 36 or 40 in a direction perpendicular to the axis 22. In other configurations of the present seal arrangement 50, both of the components 54 and 56 are stationary, only one of the components 54 or 56 is rotating, or both of the components 54 and 56 are rotating at identical or varying speeds and directions.

An annular seal assembly 58 fits over a shoulder 94 and against a seat 62 formed in the first component 54. The seal assembly 58 is secured to the first component 54 by fastening means 64 such as tabs, bolts, rivets, welding, or by any other means known in the art. The seal assembly 58 comprises a back plate 66, a side plate 68 and a plurality of leaf strips 70 sandwiched by and secured to the plates 66, 68.

The back plate 66 and side plate 68 are concentric, ring shaped members. A back plate width 96 is greater than a side plate width 98 to provide downstream support for the leaf strips 70 while subjected to the illustrated fluid 36 or 40 flow direction. As illustrated, back plate 66 is radially outboard of side plate 68, while the placement is reversed if the fluid flow 36 or 40 direction is reversed. The plates 66, 68 are made of any suitable high temperature and corrosion resistant material such as a Nickel based alloy for gas turbine engine applications.

The assembly and operation of the present embodiment are similar to the initially described embodiment and will not be replicated here for brevity.

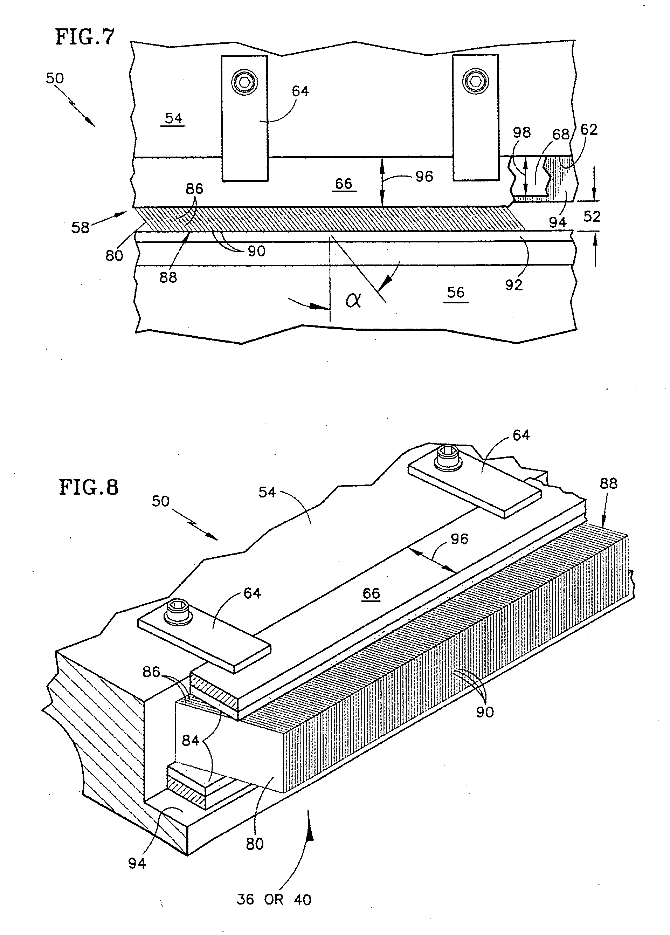

Referring lastly to Figs. 7-8, one skilled in the art will recognize yet another embodiment of a seal arrangement 50 for restricting leakage of a fluid 36 or 40 through a gap 52 disposed between a first component 54 and a second component 56. In the present embodiment, each component 54, 56 is stationary and spaced apart to form the gap 52. A seal assembly 58 restricts leakage of the fluid 36 or 40 through the gap 52. In other configurations of the present seal arrangement 50, one of the components 54 or 56 is rotating, or both of the components 54 and 56 are rotating at identical or varying speeds and directions.

A linear seal assembly 58 fits over a shoulder 94 and against a seat 62 formed in the first component 54. The seal assembly 58 is secured to the first component 54 by fastening means 64 such as tabs, bolts, rivets, welding, or by any other means known in the art. The seal assembly 58 is comprised of a back plate 66, a side plate 68 and a plurality of leaf strips 70 sandwiched by and secured to the plates 66, 68.

The back plate 66 and side plate 68 are rectangular shaped members. A back plate width 96 is greater than a side plate width 98 to provide downstream support for the leaf strips 70 while subjected to the illustrated fluid 36 or 40 flow direction. The plates 66, 68 are made of any suitable high temperature and corrosion resistant material such as a Nickel based alloy for gas turbine engine applications.

The assembly and operation of the present embodiment are similar to the initially described embodiment and will not be replicated here for brevity.

While the present invention has been described in the context of specific embodiments for use in the gas turbine engine industry, it is recognized that other industries would similarly benefit from the inventive seal arrangements.

Other alternatives, modifications and variations will become apparent to those skilled in the art having read the foregoing description. Accordingly, the invention is intended to embrace those alternatives, modifications and variations as fall within the broad scope of the appended claims.

## Claims

1. A seal assembly (58) comprising:
a back plate (66);
a side plate (68);
a plurality of leaf strips (70); and
wherein said leaf strips (70) are stacked flat without gaps, sandwiched widthwise between said side and back plates (66, 68), and secured to each plate (66, 68) along an edge (86) of the strips (70).

2. The seal assembly of claim 1, wherein the leaf strips (70) are secured along at least a portion of an edge (86) that is in contact with a plate (66, 68).

3. The seal assembly of claim 1 or 2, wherein said side plate (66) and back plate (68) are ring shaped and a free end of said leaf strips (70) extends radially inwardly towards a center point of each plate (66, 68).

4. The seal assembly of claim 3, wherein said leaf strips (70) extend inwardly at an angle (α) to a radial line (82) extending from a plate (66, 68) to the center point.

5. The seal assembly of claim 3 or 4, wherein each of the back and side plates (66, 68) has an inner diameter (76, 78) and the inner diameter (76) of the back plate (68) is less than the inner diameter (78) of the side plate (68).

6. The seal assembly of any preceding claim, wherein said leaf strips (70) have a thickness of less than 0.006 inches and a surface finish of less than 33 micro inches.

7. The seal assembly of any preceding claim, wherein said leaf strips (70) are secured between said back and side plates (66,68) with a braze material.

8. The seal assembly of any preceding claim, wherein the free ends of the leaf strips (70) comprise an inner edge thickness profile (90) that is concave.

9. The seal assembly of any of claims 1 to 7, wherein the free ends of the leaf strips (70) comprise an inner edge thickness profile that is linear.

10. The seal assembly of any preceding claim, wherein the leaf strip free ends are able to flex towards the back and side plates (66,68).

11. A seal arrangement (50) for restricting leakage of a fluid through a gap (52) disposed between two components (54, 56) comprising:
a first component (54);
a second component (56) spaced from the first component (54) and forming a gap (52) therebetween;
a seal assembly (58) according to any preceding claim;
means (64) for securing the seal assembly (58) to the first component (54); and
wherein the leaf strips (70) extend from said seal assembly (58), bridge the gap (52), and contact the second component (56).
